# EUROPÄISCHE PATENTSCHRIFT

(11) **EP 4 424 466 B1**
(45) Veröffentlichungstag und Bekanntmachung des Hinweises auf die Patenterteilung: **02.09.2026**
(21) Anmeldenummer: 24180830.2
(22) Anmeldetag: 02.07.2020
(51) Int. Cl.: B23Q 3/12, B23Q 5/04

(54) **WERKZEUGHALTER, VERFAHREN ZU DESSEN BETREIBUNG, SYSTEM UMFASSEND WERKZEUGHALTER UND VERWENDUNG EINES WERKZEUGHALTERS**
TOOL HOLDER, METHOD OF OPERATING THE SAME, SYSTEM COMPRISING A TOOL HOLDER, AND USE OF A TOOL HOLDER
PORTE-OUTIL, METHODE DE FONCTIONNEMENT, SYSTEME COMPRENANT UN PORTE-OUTIL ET UTILISATION D'UN PORTE-OUTIL

(30) Priorität: 03.07.2019 DE 102019117940
(43) Veröffentlichungstag der Anmeldung: 04.09.2024
(62) Dokumentnummer(n) der früheren Anmeldung(en) nach Art. 76 EPÜ: 20737412.5 / 3 993 949
(73) Patentinhaber: SycoTec GmbH & Co. KG, 88299 Leutkirch im Allgäu (DE)
(72) Erfinder: Graf, Valentin, 88299 Leutkirch (DE); Steinle, Simon, 88299 Leutkirch (DE)
(74) Vertreter: Patentanwälte Olbricht, Buchhold, Keulertz Partnerschaft mbB

(56) Entgegenhaltungen:
- EP-A1- 2 302 771
- EP-A2- 2 759 377
- DE-U1- 20 218 632
- US-A- 4 077 736
- US-A1- 2001 049 325

## Beschreibung

Die Erfindung betrifft einen Werkzeughalter als Spindeleinsatz zum Einsetzen in ein Spannelement einer Motorspindel, ein System bestehend aus einer Motorspindel mit einem Spannelement und einem Werkzeughalter, ein Verfahren für das Betreiben eines Werkzeughalters und eine Verwendung eines Werkzeughalters.

Zum Bearbeiten von Werkstücken werden Werkzeuge verwendet, die mittels einer Spindel einer Bearbeitungsmaschine in Drehung versetzt werden. Neben diesem klassischen Anwendungsfall in einer Werkzeugmaschine, zum Beispiel in einem mehrachsigen Bearbeitungszentrum, ist es auch bekannt eine zerspanende Bearbeitung in einer Drehmaschine durchzuführen, bei welchem die verschiedenen Werkzeuge in einen Werkzeugrevolver vorgehalten werden. In solchen Anwendungsfall werden sowohl passive Werkzeuge, also nicht rotativ angetriebene Werkzeuge, wie auch aktiv rotierend angetriebene Werkzeuge einzusetzen. Mit den Werkzeugen kann die Geometrie der Werkstücke durch Abtragen von Material verändert werden. Die Lagerungen der Spindeln der Bearbeitungsmaschinen müssen dabei jedoch große Kräfte aufnehmen. Dadurch sind sie in der Drehzahleignung eingeschränkt. Um hohe Drehzahlen zur Hochgeschwindigkeits-Mikrobearbeitung der Werkstücke einzusetzen, werden kleine Werkzeuge genutzt, mit denen eine hohe Präzision und Oberflächengüte erreicht und die Bearbeitungszeit verkürzt werden kann. Durch die Verwendung von für die Werkzeuge optimalen Drehzahlen werden Standzeiten der Werkzeuge verlängert. Hochgeschwindigkeitsmaschinen zum Antreiben von kleinen Werkzeugen sind allerdings kostenintensiv und können lediglich begrenzte Kräfte aufnehmen. Daher werden Werkzeuge zum Einwechseln in die Spindel von Bearbeitungsmaschinen verwendet, die nach Bedarf hohe Drehzahlen bereitstellen können.

Aus der WO 2015/036840 A2 ist dazu eine fluidbetriebene Hochgeschwindigkeitsspindel bekannt, die als Anbauteil ausgebildet ist und über einen Schaft an eine Spindel einer Bearbeitungsmaschine angebaut wird. Die Drehzahl dieser Hochgeschwindigkeitsspindel ist allerdings lastabhängig. Weiter sind die Betriebskosten vergleichsweise hoch.

Aus der US 4,077,736 B ist ein gattungsgemäßer Werkzeughalter zum Einsetzen in ein Spannelement einer Motorspindel bekannt, welcher den nächstkommenden Stand der Technik bildet.

Auch ist aus der US 2001/0049325 A1 ein gattungsgemäßer Werkzeughalter bekannt.

Als Aufgabe der Erfindung kann daher angesehen werden, einen verbesserten Werkzeughalter bereitzustellen, mit dem die Erhöhung der Drehzahl eines Werkzeugs vereinfacht und kostengünstig ist.

Hauptmerkmale der Erfindung sind in den Ansprüchen 1, 12, 13 und 15 angegeben. Ausgestaltungen sind Gegenstand der Ansprüche 2 bis 11 und 14.

Bei einem Werkzeughalter als Spindeleinsatz zum Einsetzen in ein Spannelement einer Motorspindel oder als Einsatzelement in den Werkzeugrevolver einer Drehmaschine, wobei der Werkzeughalter eine Gehäuseeinheit, eine in der Gehäuseeinheit angeordnete Spindeleinheit, die ein Antriebselement und ein drehbar gelagertes mit dem Antriebselement bewegungsgekoppeltes Wellenelement mit einem Halteelement zum Halten eines Werkzeugs umfasst, eine an oder in der Gehäuseeinheit angeordnete Energiespeichereinheit zur Energieversorgung des Antriebselements umfasst, wobei das Antriebselement einen elektrischen Antrieb mit einem mit der Gehäuseeinheit verbundenen Stator und einem mit dem Wellenelement bewegungsgekoppelten Rotor aufweist, ist erfindungsgemäß vorgesehen, dass der Werkzeughalter weiter eine an oder in der Gehäuseeinheit angeordnete Steuereinheit zum Steuern des Antriebselements umfasst, und dass der Werkzeughalter eine bidirektionale Kommunikationsschnittstelle zum Übermitteln und Empfangen eines Energiekapazitätssignals und/oder eines Leistungssignals an eine externe Prozessoreinheit aufweist.

Mit der Erfindung wird damit ein Werkzeughalter als Spindeleinsatz zum Einsetzen in ein Spannelement einer Motorspindel einer Bearbeitungsmaschine oder als Einsatzelement in den Werkzeugrevolver einer Drehmaschine bereitgestellt, mit dem ein Werkzeug mittels eines elektrischen Antriebs auf hohe Drehzahlen beschleunigt werden kann. Der elektrische Antrieb ist in der Gehäuseeinheit des Werkzeughalters angeordnet und wird durch die Energiespeichereinheit mit elektrischer Energie versorgt. Weiter weist der elektrische Antrieb einen Stator, der mit der Gehäuseeinheit verbunden ist, und einen Rotor auf, der mit dem an der Gehäuseeinheit drehbar gelagerten Wellenelement bewegungsgekoppelt ist, wobei das Wellenelement ein Halteelement zum Halten eines Werkzeugs aufweist. Eine Rotation des Rotors bewirkt damit eine Rotation des Wellenelementes und damit des von dem Halteelement des Wellenelements gehaltenen Werkzeugs. Mittels einer Steuereinheit, die an oder in der Gehäuseeinheit angeordnet ist, kann der elektrische Antrieb gesteuert werden. Die Gehäuseeinheit des Werkzeughalters ist dabei so ausgebildet, dass die Gehäuseeinheit in ein Spannelement einer Motorspindel einer Bearbeitungsmaschine oder den Werkzeugrevolver einer Drehmaschine eingesetzt werden kann. Der Werkzeughalter kann damit auf einfache Weise mit der Motorspindel einer Bearbeitungsmaschine oder den Werkzeugrevolver einer Drehmaschine verbunden werden. Weiter weist der Werkzeughalter einen Energiespeicher auf und benötigt damit keine dauerhafte elektrische Verbindung zu einem externen Energiespeicher und/oder einer externen Energiequelle. Mit dem Werkzeughalter kann damit eine Bearbeitungsmaschine oder Drehmaschine durch ein einfaches Einsetzen des Werkzeughalters in die Motorspindel der Bearbeitungsmaschine oder den Werkzeugrevolver einer Drehmaschine bei Bedarf für hohe Drehzahlen ausgerüstet werden, ohne das Anpassungen benötigt werden, was z. B. als "plug and play" bezeichnet werden kann. Die Anzahl der Wechsel des zu bearbeitenden Werkstücks zwischen verschiedenen Bearbeitungsmaschinen/ Drehmaschine werden damit verringert. Weiter ist die Verwendung eines elektrischen Antriebs kostengünstig.

Mit der bidirektionalen Kommunikationsschnittstelle kann eine externe Prozessoreinheit den Zustand des Werkzeughalters erfassen und Steuersignale für den Betrieb des Werkzeughalters bzw. des elektrischen Antriebs und des damit gedrehten Werkzeugs übermitteln. Die bidirektionale Kommunikationsschnittstelle kann vorzugsweise auch ein Drehzahlsignal und/oder weitere Prozessparameter Übermitteln und Empfangen.

Oftmals wird nachfolgend der Einsatz der Erfindung in einer Bearbeitungsmaschine beschrieben, ohne aber die Erfindung hierauf zu beschränken. Der Begriff "Bearbeitungsmaschine" umfasst hierbei analog auch den Begriff "Drehmaschine" oder "Drehbank".

Vorzugsweise ist die Schnittstelle des Werkzeughalters zur Motor-spindel als Hohlschaftkegel-Schnittstelle, Schaftkegel-Schnitt- stelle, BT-Schnittstelle oder ISO/CAPTO-Schnittstelle ausgeführt.

Vorteilhafterweise ist eine maximale Drehzahl des mit dem Rotor bewegungsgekoppelten Wellenelements größer als 10.000 U/min, weiter vorzugsweise größer als 15.000 U/min, weiter vorzugsweise größer als 20.000 U/min, weiter vorzugsweise größer als 25.000 U/min, weiter vorzugsweise größer als 30.000 U/min, weiter vorzugsweise größer als 50.000 U/min, weiter vorzugsweise 100.000 U/min. Die maximale Drehzahl kann dabei weiter z. B. 200.000 U/min oder unbegrenzt hoch sein.

Damit kann der Werkzeughalter als Hochgeschwindigkeitsmaschine ausgebildet sein, so dass eine Hochgeschwindigkeits-Mikrobearbeitung mittels einer Bearbeitungsmaschine durchgeführt werden kann.

Die Steuereinheit kann mindestens ein Schaltelement zum Empfangen mindestens eines Steuersignals aufweisen, wobei das Schaltelement mittels des mindestens einen Steuersignals zwischen einer Rotor-dreht-Stellung und einer Rotor-steht-Stellung überführbar ist, wobei das Schaltelement in der Rotor-dreht-Stellung das Antriebselement mit der Energiespeichereinheit elektrisch verbindet und in der Rotor-steht-Stellung das Antriebselement von der Energiespeichereinheit elektrisch trennt.

In einer Ausführungsform kann das mindestens eine Steuersignal ein Rotor-dreht-Stellung-Signal sein. Ein weiteres Steuersignal kann ein Rotor-steht-Signal sein. Damit wird eine einfache Handhabung des Werkzeughalters bereitgestellt. Die Steuereinheit schaltet das Schaltelement bei Empfang des Rotor-dreht-Stellung-Signals in die Rotor-dreht-Stellung-Stellung und bei Empfang des Rotor-steht-Stellung-Signals in die Rotor-steht-Stellung.

In einer alternativen Ausführungsform wird das Schaltelement von außen betätigt und sendet in der Rotor-dreht-Stellung ein Rotor-dreht-Stellung-Signal und in der Rotor-steht-Stellung ein Rotor-steht-Stellung-Signal aus. Die beiden Signale können von der Steuereinheit empfangen werden.

Mittels des Schaltelements kann ein Benutzer oder eine externe Steuereinheit den elektrischen Antrieb durch das elektrische Verbinden mit der Energiespeichereinheit mit Energie versorgen, so dass der Rotor des elektrischen Antriebs in Drehung versetzt wird, in dem das Schaltelement in die Rotor-dreht-Stellung überführt wird. Weiter kann mittels des Schaltelements in der Rotor-steht-Stellung die elektrische Verbindung zwischen dem elektrischen Antrieb und der Energiespeichereinheit getrennt werden, sodass der Rotor des elektrischen Antriebs zum Stehen kommt.

Dabei kann das Schaltelement einen mit einem Fluid beaufschlagten Druckschalter, einen mechanischen oder induktiven Schalter, ein optisches Signalempfangselement einen Rotationssensor und/oder ein drahtloses nicht-optisches Signalempfangselement aufweisen.

Mit Vorteil kann das Schaltelement der mit Fluid beaufschlagter Druckschalter sein, wobei die Gehäuseeinheit eine mit dem Fluid gefüllte Fluidleitung aufweist, die den Druckschalter mit einer am Halteelement angeordneten Austrittsöffnung zum Benetzen eines Werkzeugs mit dem Fluid verbindet.

Mithilfe des vorgeschlagenen Rotationssensor, der sowohl in einer Bearbeitungsmaschine mit Spindelantrieb wie auch in einer Drehmaschine eingesetzt werden kann, wird die Rotationsbewegung der Motorspindel oder der Antriebswelle in dem Werkzeugrevolver, bzw. in einer Werkzeugaufnahme des Werkzeugrevolvers ermittelt und als Schaltsignal genutzt.

Das Fluid wird damit in zweifacher Funktion verwendet. Zum einen, um eine hydraulische Verbindung zwischen dem Druckschalter und dem elektrischen Schalter bereitzustellen. Zum anderen, um eine Benetzung des Werkzeugs zum Kühlen bereitzustellen.

Weiter kann die Gehäuseeinheit ein Flächenelement zur Anlage an die Motorspindel aufweisen, wobei an dem Flächenelement ein Stellungsschalter angeordnet ist, der in einer Externstellung, in welcher der Werkzeughalter nicht in die Motorspindel eingesetzt ist, aus dem Flächenelement hervorragt und der Stellungsschalter in eine Betriebs-bereit-Stellung übergeht, wenn der Werkzeughalter in die Motorspindel eingesetzt ist und der Stellungsschalter automatisch von der Betriebs-bereit- in die Externstellung übergeht, wenn der Werkzeughalter aus der Motorspindel ausgebaut ist.

Mit dem Stellungsschalter kann beispielsweise eine elektrische Verbindung zwischen dem elektrischen Antrieb und dem Energiespeicher bewirkt werden, wenn der Stellungsschalter in die Betriebs-bereit-Stellung übergeht. In der Externstellung ist die elektrische Verbindung in diesem Fall getrennt. Auf diese Weise kann der Stellungsschalter als Detektor fungieren, ob die Motorspindel korrekt an dem Flächenelement der Gehäuseeinheit anliegt, wenn die Gehäuseeinheit mit der Motorspindel verbunden wird. Sollte die Motorspindel nicht korrekt an dem Flächenelement anliegen, kann der elektrische Antrieb nicht eingeschaltet werden, da die elektrische Verbindung zwischen dem elektrischen Antrieb und dem Energiespeicher unterbrochen ist. Alternativ oder zusätzlich kann der Stellungsschalter in der Betriebs-bereit-Stellung ein Betriebs-bereit-Stellung-Signal ausgeben. Erst wenn das Betriebs-bereit-Stellungssignal ausgegeben und von der Steuereinheit erkannt wird, ist der Werkzeughalter bereit in Betrieb genommen zu werden. Für den sicheren Betrieb des Werkzeughalters sind dann zwei Signale (oder geschlossene Schalter) notwendig: das Betriebs-bereit-Stellungssignal des Stellungsschalters und das Rotor-dreht-Stellungssignal des Schaltelements.

Der Werkzeughalter kann weiter ein Dichtelement zum Abdichten der Gehäuseeinheit aufweisen.

Der Werkzeughalter kann dabei mehrere verschiedene Dichtelemente aufweisen. Eines der Dichtelemente kann zum Beispiel eine berührungslose Labyrinth-Dichtung zwischen dem Wellenelement und der Spindeleinheit sein. Alternativ oder zusätzlich kann eine O-RingDichtung an anderer Stelle vorgesehen sein. Weitere Dichtungstypen werden als Dichtelement damit nicht ausgeschlossen.

Die Steuereinheit kann ein außen an der Gehäuseeinheit angeordnetes Betätigungselement zum manuellen Einstellen einer Drehzahl des Rotors aufweisen.

Ein Benutzer kann damit mittels des Betätigungselements die Drehzahl des Motors manuell einstellen, um die Geschwindigkeit der Bearbeitung mittels des Werkzeugs zu beeinflussen.

Weiter kann die Steuereinheit einen in einem Fluidleitungsanschluss angeordneten Drehzahlregler aufweisen, wobei der Drehzahlregler zum Umsetzen eines mittels des Fluidleitungsanschluss übermittelten Fluiddrucks in eine Drehzahl ausgebildet ist.

Der Drehzahlregler kann dabei als Drucksensor ausgebildet sein, der den Druck an dem Fluidleitungsanschluss misst. Die Steuereinheit gibt abhängig vom ermittelten Druck unterschiedliche Drehzahlsignale an den elektrischen Antrieb aus.

Alternativ hierzu ist insbesondere im Anwendungsfall einer Drehmaschine vorgesehen, dass der Werkzeughalter einen Drehzahlsensor aufweist oder mit einem Drehzahlsensor (zB der Bearbeitungs- oder Drehmaschine) in Wirkverbindung steht (hierzu sind dann entsprechende Kommunikationselemente an dem Werkzeughalter vorgesehen) und die Steuereinheit einen Drehzahlregler aufweist, wobei der Drehzahlregler zum Umsetzen einer durch den Drehzahlsensor übermittelten Rotationsgeschwindigkeit in eine Drehzahl ausgebildet ist.Der Werkzeughalter kann weiter eine Messeinheit zum Messen eines Leistungsmesswerts des Antriebselements und eine Auswerteeinheit zum Auswerten des Leistungsmesswerts aufweisen, wobei die Auswerteeinheit ein Schadenssignal ausgibt, wenn der Leistungsmesswert einen vordefinierten Schwellwert unterschreitet.

Mittels der Messeinheit und der Auswerteeinheit kann der Zustand des Werkzeughalters bzw. des Werkzeugs überwacht werden. Die Leistungsmessung ist dabei aufgrund der verwendeten Gleichspannung mit hoher Genauigkeit möglich. Damit kann zum Beispiel ein Werkzeugbruch im laufenden Betrieb erkannt werden.

Weiter kann eine optische und/oder akustische Anzeigeeinheit für den Ladezustand der Energiespeichereinheit vorgesehen sein.

Die Erfindung betrifft weiter ein Verfahren für das Betreiben eines Werkzeughalters nach der vorhergehenden Beschreibung in einer Motorspindel, wobei der elektrische Antrieb erst dann mit elektrischer Energie versorgt wird, wenn die Steuereinheit von dem Stellungsschalter ein Betriebs-bereit-Stellung-Signal und von dem mindestens einen Schaltelement ein Rotor-dreht-Stellung-Signal erhält.

Vorteile und Wirkungen sowie Weiterbildungen des Verfahrens ergeben sich aus den Vorteilen und Wirkungen sowie Weiterbildungen des oben beschriebenen Werkzeughalters. Es wird daher in dieser Hinsicht auf die vorangegangene Beschreibung verwiesen.

Weiter betrifft die Erfindung ein System bestehend aus einer Motorspindel mit einem Spannelement und einem Werkzeughalter nach der vorhergehenden Beschreibung, wobei die Gehäuseeinheit des Werkzeughalters mit dem Spannelement der Motorspindel verbunden ist.

Vorteile und Wirkungen sowie Weiterbildungen des Systems ergeben sich aus den Vorteilen und Wirkungen sowie Weiterbildungen des oben beschriebenen Werkzeughalters. Es wird daher in dieser Hinsicht auf die vorangegangene Beschreibung verwiesen.

Das System kann mit Vorteil ein Werkzeugmagazin umfassen, mit einer Aufnahmeposition für den Werkzeughalter, wobei die Aufnahmeposition mit einer Ladeeinheit ausgestattet ist, um die Energiespeichereinheit eines auf der Ladeposition ruhenden Werkzeughalters mit elektrischer Energie zu laden.

Damit kann das System einen Werkzeughalter, der in der Ladeposition ruht, mit elektrischer Energie laden, sodass ein externes Ladegerät für den Energiespeicher des Werkzeughalters nicht weiter benötigt wird.

Weiter kann das System eine Prozessoreinheit aufweisen, die mit der Steuereinheit des Werkzeughalters über die bidirektionale Kommunikationsschnittstelle Signale austauscht und die Prozessoreinheit insbesondere auf die Steuereinheit des Werkzeughalters einwirkt.

Während der Rotation des Rotors des Werkzeughalters kann ein Spindelrotor der Motorspindel stillstehen oder rotieren.

Aus Sicherheitsgründen kann dabei bevorzugt sein, dass der Spindelrotor der Motorspindel stillsteht und lediglich der Rotor des Werkzeughalters gedreht wird. Es sei jedoch nicht damit ausgeschlossen, dass der Spindelrotor der Motorspindel ebenfalls gedreht wird, während der Rotor des Werkzeughalters gedreht wird. Damit kann die Drehgeschwindigkeit des von dem Werkzeughalter gehaltenen Werkzeugs weiter erhöht werden.

Die Prozessoreinheit kann die Rotation des Rotors des Werkzeughalters und die Rotation des Spindelrotors der Motorspindel regeln und steuern.

Damit kann die Prozessoreinheit sowohl den elektrischen Antrieb des Werkzeughalters als auch die Bearbeitungsmaschine, in die der Werkzeughalter eingesetzt ist, regeln und steuern. Eine zusätzliche Prozessoreinheit für die Bearbeitungsmaschine oder den Werkzeughalter ist damit nicht weiter notwendig.

Die Erfindung betrifft ebenfalls die Verwendung eines Werkzeughalters nach der vorhergehenden Beschreibung in einer Motorspindel, wobei der Werkzeughalter mit der Gehäuseeinheit in das Spannelement der Motorspindel eingesetzt wird und mittels des Spannelements an der Motorspindel gespannt wird, wobei gemäß der Erfindung vorgesehen ist, dass das Wellenelement mittels des elektrischen Antriebs des Antriebselements rotiert wird.

Des weiteren umfasst die Erfindung auch die Verwendung eines Werkzeughalters wie vorher beschrieben in einem Werkzeugrevolver einer Drehmaschine, wobei der Werkzeughalter mit der Gehäuseeinheit in das Spannelement des Werkzeugrevolver eingesetzt wird und mittels des Spannelements an dem Werkzeugrevolver gespannt wird, wobei das Wellenelement mittels des elektrischen Antriebs des Antriebselements rotiert wird.

Vorteile und Wirkungen sowie Weiterbildungen des Systems ergeben sich aus den Vorteilen und Wirkungen sowie Weiterbildungen des oben beschriebenen Werkzeughalters. Es wird daher in dieser Hinsicht auf die vorangegangene Beschreibung verwiesen.

Weiter kann das Wellenelement mittels des Antriebselements mit einer Drehzahl von mindestens 10000 U/min rotiert werden.

Vorteilhafterweise ist eine maximale Drehzahl des mit dem Rotor bewegungsgekoppelten Wellenelements größer als 10000 U/min, weiter vorzugsweise größer als 15000 U/min, weiter vorzugsweise größer als 20000 U/min, weiter vorzugsweise größer als 25000 U/min, weiter vorzugsweise größer als 30000 U/min, weiter vorzugsweise größer als 50000 U/min, weiter vorzugsweise 100000 U/min. Die maximale Drehzahl kann dabei weiter z. B. 200000 U/min oder unbegrenzt hoch sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnitt-Darstellung des Werkzeughalters nach der Erfindung;
- Fig. 2: ein Ausschnitt aus Figur 1; und
- Fig. 3: ein Schaltplan der Steuerung des Werkzeughalters nach der Erfindung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

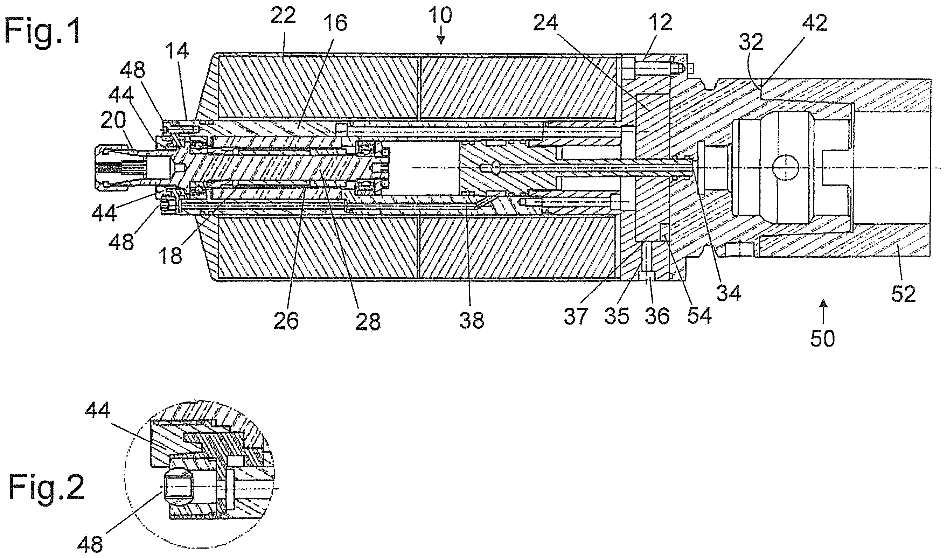

Der Werkzeughalter wird im Folgenden in seiner Gesamtheit mit dem Bezugszeichen 10 bezeichnet, wie in Figur 1 dargestellt.

Der Werkzeughalter 10 ist als Spindeleinsatz zum Einsetzen in ein Spannelement einer Motorspindel 52 einer Bearbeitungsmaschine ausgebildet. Der Werkzeughalter 10 weist eine Gehäuseeinheit 12 auf, die in die Motorspindel 52 eingesetzt werden kann. Dabei kann ein Endstück der Gehäuseeinheit 12 passend zu einem Endstück der Motorspindel 52 ausgebildet sein. Der Werkzeughalter 10 kann Teil eines Systems 50 sein, dass weiter eine Motorspindel 52 mit einem Spannelement umfasst. Die Gehäuseeinheit 12 des Werkzeughalters 10 kann mit dem Spannelement der Motorspindel 52 verbunden sein. Die Schnittstelle des Werkzeughalters 10 zur Motorspindel 52 kann beispielsweise als Hohlschaftkegel-Schnittstelle, Schaftkegel-Schnittstelle, BT-Schnittstelle oder ISO/CAPTO-Schnittstelle ausgeführt sein.

In der Gehäuseeinheit 12 ist eine Spindeleinheit 14 angeordnet. Die Spindeleinheit 14 weist dabei ein drehbar gelagertes Wellenelement 18 und ein Antriebselement 16 in Form eines elektrischen Antriebs auf.

Das drehbar gelagerte Wellenelement 18 ist mit dem Antriebselement 16 bewegungsgekoppelt und umfasst ein Halteelement 20 zum Halten eines Werkzeugs. Dabei weist das Antriebselement 16 einen Rotor 28 auf, der in einem Stator 26 des Antriebselements 16 gelagert ist. Der Stator 26 ist dabei mit der Gehäuseeinheit 12 verbunden, sodass der Stator 26 keine Drehung innerhalb der Gehäuseeinheit 12 durchführen kann. Der Rotor 28 ist mit dem Wellenelement bewegungsgekoppelt und in Bezug auf den Stator 26 drehbar gelagert. Eine Drehung des Rotors 28 bewirkt dabei eine Drehung des Wellenelements 18.

Eine maximale Drehzahl des Rotors 28 kann zum Beispiel größer als 10.000 U/min, weiter vorzugsweise größer als 15.000 U/min, weiter vorzugsweise größer als 20.000 U/min, weiter vorzugsweise größer als 25.000 U/min, weiter vorzugsweise größer als 30.000 U/min, weiter vorzugsweise größer als 50.000 U/min, weiter vorzugsweise 100.000 U/min sein. Die maximale Drehzahl kann dabei weiter z. B. 200.000 U/min oder unbegrenzt hoch sein.

Weiter ist in der Gehäuseeinheit 12 eine Energiespeichereinheit 22 zur Versorgung des Antriebselements 16 mit elektrischer Energie angeordnet. Die Energiespeichereinheit 22 kann zum Beispiel ein Akkumulator sein, der mittels einer externen Spannungsquelle aufgeladen werden kann.

Die Steuereinheit 24 kann zum Beispiel ein Frequenzumrichter für das Antriebselement 16 sein. Die Steuereinheit 24 weist mindestens ein Schaltelement 3 zum Empfangen und/oder Aussenden mindestens eines Steuersignals auf. Das Schaltelement 34 ist dabei elektrisch zwischen der Energiespeichereinheit 22 und dem Antriebselement 16 angeordnet.

Das Schaltelement 34 weist weiter eine Rotor-dreht-Stellung und eine Rotor-steht-Stellung auf, zwischen denen das Schaltelement 34 überführt werden kann. In der Rotor-dreht-Stellung verbindet das Schaltelement 34 die Energiespeichereinheit 22 mit dem Antriebselement 16 elektrisch. In der Rotor-steht-Stellung trennt das Schaltelement 34 eine elektrische Verbindung zwischen der Energiespeichereinheit 22 und dem Antriebselement 16.

Das Schaltelement 34 ist in einer ersten Ausführungsform ausgebildet bei Empfang eines Rotor-dreht-Stellung-Signals von der Rotor-steht-Stellung in die Rotor-dreht-Stellung überzugehen. Weiter ist das Schaltelement 34 dabei ausgebildet, bei Empfang eines Rotor-steht-Stellung-Signals von der Rotor-dreht-Stellung in die Rotor-steht-Stellung überzugehen. Das Rotor-steht-Stellung-Signal und das Rotor-dreht-Stellung-Signal können von der Steuereinheit 24 an das Schaltelement 34 übermittelt werden.

In einer alternativen Ausführungsform sendet das Schaltelement 34 ein Rotor-steht-Stellung-Signal aus, wenn es in der Rotor-steht-Stellung ist. Weiter sendet das Schaltelement 34 ein Rotor-dreht-Stellung-Signal aus, wenn es in der Rotor-dreht-Stellung ist. Die Steuereinheit 24 kann die beiden Signale empfangen. Bei Empfang des Rotor-dreht-Stellung-Signals kann die Steuereinheit 24 das Antriebselement 16 mit elektrischer Energie versorgen.

Das Schaltelement 34 kann in einem Beispiel ein Druckschalter sein, der mit Fluid beaufschlagt ist. Das Fluid überträgt als eine hydraulische Verbindung eine mechanische Bewegung zu dem Schaltelement 34, um das Schaltelement 34 zwischen der Rotor-steht-Stellung und der Rotor-dreht-Stellung zu überführen.

In diesem Ausführungsbeispiel kann die Gehäuseeinheit 12 eine mit Fluid gefüllte Fluidleitung 38 aufweisen, die den Druckschalter mit einer am Halteelement 20 angeordneten Ausgangsöffnung 48 verbindet, um das Werkzeug, das im Halteelement 20 gehalten wird, mit Fluid zu benetzen. Das Fluid kann damit zum Beispiel eine Werkzeugschneide des Werkzeugs während des Betriebs kühlen. Damit weist das Fluid eine doppelte Funktion auf.

In alternativen beispielhaften Ausführungsformen kann das Schaltelement 34 einen mechanischen Schalter, ein optisches Signalempfangselement und/oder ein drahtloses nicht-optisches Signalempfangselement aufweisen.

An der Gehäuseeinheit 12 ist weiter ein Flächenelement 42 angeordnet, das zwischen der Gehäuseeinheit 12 und der Motorspindel 52 angeordnet ist, wenn die Gehäuseeinheit 12 in die Motorspindel 52 eingesetzt wird. Die Motorspindel 52 liegt dabei an dem Flächenelement 42 an. Das Flächenelement 42 weist dabei einen Stellungsschalter 32 auf, der in einer Externstellung aus dem Flächenelement 42 hervorragt und in einer Einbau- bzw. Betriebs-bereit-Stellung zumindest teilweise in dem Flächenelement 42 angeordnet ist. Der Stellungsschalter 32 ist dabei in der Externstellung, wenn der Werkzeughalter 10 nicht in die Motorspindel 52 eingesetzt ist. Der Stellungsschalter 32 befindet sich in der Betriebs-bereit-Stellung, wenn der Werkzeughalter 10 vorzugsweise korrekt in die Motorspindel 52 eingesetzt ist. Der Stellungsschalter 32 geht dabei automatisch von der Einbau- in die Externstellung über, wenn der Werkzeughalter 10 aus der Motorspindel 52 ausgebaut wird. Der automatische Übergang kann dabei zum Beispiel mittels eines nicht dargestellten Federelements bewirkt werden, das den Stellungsschalter 32 in die Externstellung treibt. In der Betriebs-bereit-Stellung ist das nicht dargestellte Federelement dabei im gespannten Zustand.

Außen an der Gehäuseeinheit 12 ist ein Betätigungselement 36 angeordnet, mit dem eine Drehzahl für den Rotor 28 eingestellt werden kann. Das Betätigungselement 36 ist dabei Teil der Steuereinheit 24, die eine Drehzahlregelung für den Rotor 28 aufweist. Das Betätigungselement 36 kann in einer ersten Ausführungsform ein Potentiometer sein.

Alternativ oder zusätzlich kann das Betätigungselement 36 in einer weiteren Ausführungsform als Druckfläche für einen Benutzer ausgebildet sein. Dabei kann die Steuereinheit 24 einen Drehzahlregler 37 aufweisen, der in einem Fluidleitungsanschluss 35 angeordnet ist, wobei der Fluidleitungsanschluss 35 mit den Betätigungselement 36 gekoppelt sein kann. Mit dem Betätigungselement 36 kann dabei der Druck in dem Fluidleitungsanschluss 35 geändert werden. Der Drehzahlregler 37 ist dabei als Drucksensor ausgebildet, der den Druck in dem Fluidleitungsanschluss 35 misst und als Drucksignal in ein Drehzahlsignal umsetzt und an die Steuereinheit 24 übergibt.

Um den Werkzeughalter 10 mittels einer externen Prozessoreinheit steuern und/oder überwachen zu können, weist der Werkzeughalter 10 eine bidirektionale Kommunikationsstelle 54 auf. Die bidirektionale Kommunikationsstelle 54 ist zum Übermitteln und Empfangen von Signalen ausgebildet. Die Signale können zum Beispiel Informationen über die Energiekapazität, die Drehzahl, die Leistung und/oder weiterer Prozessparameter aufweisen. Die Signale können z. B. über eine Bluetooth-Verbindung an ein Programm ausgegeben werden.

Das System 50 kann die externe Prozessoreinheit aufweisen, die mit der Steuereinheit 24 des Werkzeughalters 10 über die bidirektionale Kommunikationsschnittstelle 54 Signale austauscht. Die externe Prozessoreinheit wirkt insbesondere auf die Steuereinheit 24 des Werkzeughalters 10 ein.

Die externe Prozessoreinheit regelt und steuert die Rotation des Rotors 28 des Werkzeughalters 10 und die Rotation des Spindelrotors der Motorspindel 52. Dabei kann der Spindelrotor der Motorspindel 52 während der Rotation des Rotors 28 des Werkzeughalters 10 stillstehen oder rotieren.

Der Werkzeughalter 10 kann weiter eine Messeinheit zum Messen eines Leistungsmesswertes des Antriebselements 16 aufweisen. Weiter kann der Werkzeughalter 10 eine Auswerteeinheit aufweisen, die den gemessenen Leistungsmesswert empfängt und auswertet. Dabei vergleicht die Auswerteeinheit den gemessenen Leistungsmesswert mit einem vordefinierten Schwellwert. Unterschreitet der Leistungsmesswert den vordefinierten Schwellwert, wird durch die Auswerteeinheit ein Schadenssignal ausgegeben. Da der elektrische Antrieb des Antriebselements mittels einer Gleichspannung aus dem Energiespeicher betrieben wird, kann der Leistungsmesswert sehr genau gemessen werden. Im Schadensfall, zum Beispiel bei Werkzeugbruch, nimmt das Antriebselement 16 weniger Leistung auf, als im Normalbetrieb, in dem das Werkzeug unbeschädigt ist. Wenn der Schadensfall eintritt, sinkt daher die Leistungsaufnahme unter den vordefinierten Schwellwert, so dass der Schaden durch die Auswerteeinheit anhand der gemessenen Leistung erkannt werden kann.

Der Werkzeughalter 10 weist weiter eine optische und/oder akustische Anzeigeeinheit auf, mit der der Ladezustand der Energiespeichereinheit 22 angezeigt werden kann. Damit kann rechtzeitig ein Austausch des Werkzeughalters 10 bzw. ein Aufladen der Energiespeichereinheit 22 in Angriff genommen werden.

Das System 50 umfasst weiter ein Werkzeugmagazin, mit einer Aufnahmeposition für den Werkzeughalter 10, wobei die Aufnahmeposition mit einer Ladeeinheit ausgestattet ist, um die Energiespeichereinheit 22 eines auf der Ladeposition ruhenden Werkzeughalters 10 mit elektrischer Energie zu laden.

Der Werkzeughalter 10 kann weiter ein Dichtelement 44 zum Abdichten der Gehäuseeinheit 12 aufweisen. Dabei kann ein Dichtelement 44 zwischen dem Wellenelement 18 und der Gehäuseeinheit 12 angeordnet sein und als berührungslose Labyrinthdichtung ausgebildet sein.

Dies ist in Figur 2 gezeigt, die eine Vergrößerung des Bereichs um die Labyrinthdichtung des Werkzeughalters 10 darstellt. Die Labyrinthdichtung besteht dabei aus mindestens zwei einander berührungslos hinterschneidenden ringförmige Hälften, wobei eine Hälfte mit dem Wellenelement 18 und die andere Hälfte mit der Gehäuseeinheit 12 verbunden ist. Die an dem Wellenelement 18 angeordnete ringförmige Hälfte kann mit der Hinterschneidung frei in der an der Gehäuseeinheit 12 angeordneten Hälfte gedreht werden.

In diesem Ausführungsbeispiel ist eine Austrittsöffnung 48 nahe des Dichtelements 44 an der Gehäuseeinheit 12 angeordnet. Durch die Austrittsöffnung 48 kann Fluid aus der Fluidleitung 38 auf ein in dem Halteelement 20 gehaltenes Werkzeug zum Kühlen des Werkzeugs geleitet werden.

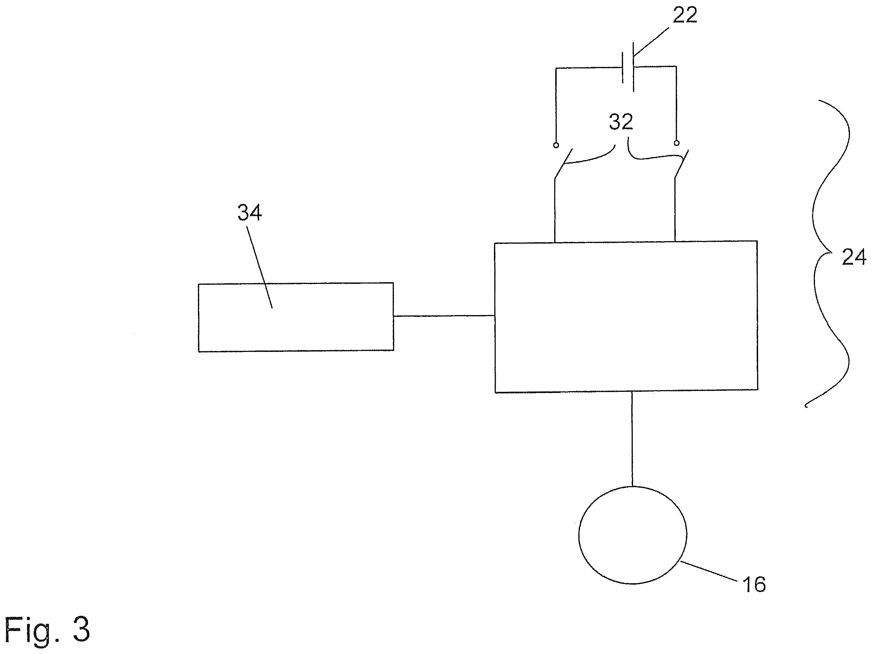

In Figur 3 ist ein Schaltplan der elektrischen Leitungen des Werkzeughalters 10 dargestellt. Zentrales Element ist dabei die Steuereinheit 24 mit dem Stellungsschalter 32. Der Stellungsschalter 32 ist zwischen der Energiespeichereinheit 22 und der Steuereinheit 24 angeordnet. Weiter ist die Steuereinheit 24 mit dem Schaltelement 34 und dem Antriebselement 16 verbunden. Wenn der Stellungsschalter 32 geöffnet ist, ist die Steuereinheit 24 von der Energiespeichereinheit 22 getrennt. Damit kann auch keine elektrische Energie von der Energiespeichereinheit 22 zu dem Antriebselement 16 übertragen werden. Der Stellungsschalter 32 schließt, wenn der Werkzeughalter 10 korrekt in eine Motorspindel 52 angeordnet wird. Die Steuereinheit 24 überträgt dann elektrische Energie an das Antriebselement 16, wenn das Schaltelement 34 betätigt wird.

In einem weiteren alternativen Ausführungsbeispiel können der Stellungsschalter 32, das Schaltelement 34 und das Betätigungselement 36 in Reihe zwischen der Energiespeichereinheit 22 und dem Antriebselement 16 geschaltet sein. Die Steuereinheit 24 wird in diesem Ausführungsbeispiel dann von dem Stellungschalter 32, dem Schaltelement 34 und dem Betätigungselement 36 gebildet.

Ein Verfahren zum Betreiben des Werkzeughalters 10 in einer Motorspindel 52 umfasst den Schritt, dass der elektrische Antrieb des Antriebselements 16 erst dann mit elektrischer Energie versorgt wird, wenn die Steuereinheit 24 von dem Stellungsschalter 32 ein Betriebs-bereit-Stellung-Signal und von dem mindestens einen Schaltelement 34 das Rotor-dreht-Stellung-Signal erhält.

Zusätzlich kann noch ein Schritt vorgesehen sein, in dem ein Drehzahlsignal an die Steuereinheit 24 übermittelt wird. Die Steuereinheit 24 steuert den elektrischen Antrieb dann gemäß dem Drehzahlsignal an, um den Rotor des elektrischen Antriebs mit einer entsprechenden Drehzahl zu rotieren. Wenn dieser Schritt vorgesehen wird, bewirkt das Schaltelement 34, dass die Steuereinheit 24 zum Empfang eines Drehzahlsignals von dem Betätigungselement 36 geschaltet wird.

Zur Verwendung des Werkzeughalters 10 wird der Werkzeughalter 10 in einer Motorspindel 52 angeordnet. Dabei wird die Gehäuseeinheit 12 in das Spannelement der Motorspindel 52 eingesetzt. Das Spannelement wird an der Motorspindel 52 gespannt, sodass die Gehäuseeinheit 12 fest mit der Motorspindel 52 verbunden wird. Mittels des elektrischen Antriebs des Antriebselements 16 wird das Wellenelement 18 dann rotiert.

Dabei kann das Wellenelement 18 mittels des Antriebselements 16 mit einer Drehzahl von mindestens 10.000 U/min rotiert werden. Vorzugsweise ist die maximale Drehzahl größer als 15.000 U/min, vorzugsweise größer als 20.000 U/min, weiter vorzugsweise größer als 25.000 U/min, weiter vorzugsweise größer als 30.000 U/min, weiter vorzugsweise größer als 50.000 U/min, weiter vorzugsweise 100.000 U/min. Die maximale Drehzahl kann dabei weiter z. B. 200.000 U/min oder unbegrenzt hoch sein.

## Patentansprüche

1. Werkzeughalter als Spindeleinsatz zum Einsetzen in ein Spannelement einer Motorspindel (52) oder als Einsatzelement in den Werkzeugrevolver einer Drehmaschine, wobei der Werkzeughalter (10) umfasst:
▪ eine Gehäuseeinheit (12),
▪ eine in der Gehäuseeinheit (12) angeordnete Spindeleinheit (14), die ein Antriebselement (16) und ein drehbar gelagertes mit dem Antriebselement (16) bewegungsgekoppeltes Wellenelement (18) mit einem Halteelement (20) zum Halten eines Werkzeugs umfasst,
und
▪ eine an oder in der Gehäuseeinheit (12) angeordnete Energiespeichereinheit (22) zur Energieversorgung des Antriebselements (16)
▪ wobei das Antriebselement (16) einen elektrischen Antrieb mit einem mit der Gehäuseeinheit (12) verbundenen Stator (26) und einem mit dem Wellenelement (18) bewegungsgekoppelten Rotor (28) aufweist,
**dadurch gekennzeichnet,**
▪ dass der Werkzeughalter (10) weiter umfasst eine an oder in der Gehäuseeinheit (12) angeordnete Steuereinheit (24) zum Steuern des Antriebselements (16), und
▪ dass der Werkzeughalter (10) eine bidirektionale Kommunikationsschnittstelle (54) zum Übermitteln und Empfangen eines Energiekapazitätssignals, und/oder eines Leistungssignals an eine externe Prozessoreinheit aufweist.

2. Werkzeughalter nach Anspruch 1, **dadurch gekennzeichnet, dass** eine maximale Drehzahl des mit dem Rotor (28) bewegungsgekoppelten Wellenelements (18) größer als 10000 U/min ist.

3. Werkzeughalter nach Anspruch 1 oder 2, **dadurch gekennzeichnet, dass** die Steuereinheit (24) mindestens ein Schaltelement (34) zum Empfangen mindestens eines Steuersignals aufweist, wobei das Schaltelement (34) mittels des mindestens einen Steuersignals zwischen einer Rotor-dreht-Stellung und einer Rotor-steht-Stellung überführbar ist, wobei das Schaltelement (34) in der Rotor-dreht-Stellung das Antriebselement (16) mit der Energiespeichereinheit (22) elektrisch verbindet und in der Rotor-steht-Stellung das Antriebselement (16) von der Energiespeichereinheit (22) elektrisch trennt.

4. Werkzeughalter nach Anspruch 3, **dadurch gekennzeichnet, dass** das Schaltelement (34) einen mit einem Fluid beaufschlagten Druckschalter, einen mechanischen oder induktiven Schalter, ein optisches Signalempfangselement, einen Rotationssensor und/oder ein drahtloses nicht-optisches Signalempfangselement aufweist.

5. Werkzeughalter nach Anspruch 4, **dadurch gekennzeichnet, dass** das Schaltelement (34) der mit Fluid beaufschlagter Druckschalter ist, wobei die Gehäuseeinheit (12) eine mit dem Fluid gefüllte Fluidleitung (38) aufweist, die den Druckschalter mit einer am Halteelement (20) angeordneten Austrittsöffnung (48) zum Benetzen eines Werkzeugs mit dem Fluid verbindet.

6. Werkzeughalter nach einem der vorhergehenden Ansprüche, **dadurch gekennzeichnet, dass** die Gehäuseeinheit (12) ein Flächenelement (42) zur Anlage an die Motorspindel (52) aufweist, wobei an dem Flächenelement (42) ein Stellungsschalter (32) angeordnet ist, der in einer Externstellung, in welcher der Werkzeughalter (10) nicht in die Motorspindel (52) eingesetzt ist, aus dem Flächenelement (42) hervorragt und der Stellungsschalter (32) in eine Betrieb-bereit-Stellung übergeht, wenn der Werkzeughalter (10) in die Motorspindel (52) eingesetzt ist und der Stellungsschalter (32) automatisch von der Betrieb-bereit- in die Externstellung übergeht, wenn der Werkzeughalter (10) aus der Motorspindel (52) ausgebaut ist.

7. Werkzeughalter nach einem der vorhergehenden Ansprüche, **dadurch gekennzeichnet, dass** der Werkzeughalter (10) weiter ein Dichtelement (44) zum Abdichten der Gehäuseeinheit (12) aufweist und/oder die Steuereinheit (24) ein außen an der Gehäuseeinheit (12) angeordnetes Betätigungselement (36) zum manuellen Einstellen einer Drehzahl des Rotors (28) aufweist und/oder der Werkzeughalter (10) die bidirektionale Kommunikationsschnittstelle (54) zum Übermitteln und Empfangen eines Drehzahlsignals und/oder weiterer Prozessparameter an eine externe Prozessoreinheit aufweist.

8. Werkzeughalter nach einem der vorhergehenden Ansprüche, **dadurch gekennzeichnet, dass** die Steuereinheit (24) einen in einem Fluidleitungsanschluss (35) angeordneten Drehzahlregler (37) aufweist, wobei der Drehzahlregler (37) zum Umsetzen eines mittels des Fluidleitungsanschluss (35) übermittelten Fluiddrucks in eine Drehzahl ausgebildet ist.

9. Werkzeughalter nach einem der vorhergehenden Ansprüche, **dadurch gekennzeichnet, dass** der Werkzeughalter einen Drehzahlsensor aufweist oder mit einem Drehzahlsensor in Wirkverbindung steht und die Steuereinheit (24) einen Drehzahlregler (37) aufweist, wobei der Drehzahlregler (37) zum Umsetzen einer durch den Drehzahlsensor übermittelten Rotationsgeschwindigkeit in eine Drehzahl ausgebildet ist.

10. Werkzeughalter nach einem der vorhergehenden Ansprüche, **dadurch gekennzeichnet, dass** der Werkzeughalter (10) weiter eine Messeinheit zum Messen eines Leistungsmesswerts des Antriebselements (16) und eine Auswerteeinheit zum Auswerten des Leistungsmesswerts aufweist, wobei die Auswerteeinheit ein Schadenssignal ausgibt, wenn der Leistungsmesswert einen vordefinierten Schwellwert unterschreitet.

11. Werkzeughalter nach einem der vorhergehenden Ansprüche, **dadurch gekennzeichnet, dass** eine optische und / oder akustische Anzeigeeinheit für den Ladezustand der Energiespeichereinheit (22) vorgesehen ist.

12. Verfahren für das Betreiben eines Werkzeughalters (10) nach einem der Ansprüche 3 bis 11 in einer Motorspindel (52), wobei der elektrische Antrieb erst dann mit elektrischer Energie versorgt wird, wenn die Steuereinheit (24) von dem Stellungsschalter ein Betrieb-bereit-Stellungs-Signal und von dem mindestens einem Schaltelement das Rotor-dreht-Stellung-Signal erhält.

13. System bestehend aus einer Motorspindel (52) mit einem Spannelement und einem Werkzeughalter (10) nach einem der vorhergehenden Ansprüche 1 bis 11, wobei die Gehäuseeinheit (12) des Werkzeughalters (10) mit dem Spannelement der Motorspindel (52) verbunden ist.

14. System nach Anspruch 13, **dadurch gekennzeichnet, dass** das System (50) ein Werkzeugmagazin umfasst, mit einer Aufnahmeposition für den Werkzeughalter (10), wobei die Aufnahmeposition mit einer Ladeeinheit ausgestattet ist, um die Energiespeichereinheit (22) eines auf der Ladeposition ruhenden Werkzeughalters (10) mit elektrischer Energie zu laden und/oder das System (50) eine Prozessoreinheit aufweist, die mit der Steuereinheit (24) des Werkzeughalters (10) über die bidirektionale Kommunikationsschnittstelle (54) Signale austauscht und die Prozessoreinheit insbesondere auf die Steuereinheit (24) des Werkzeughalters (10) einwirkt und/oder während der Rotation des Rotors (28) des Werkzeughalters (10) der Spindelrotor der Motorspindel (52) stillsteht oder rotiert und/oder die Prozessoreinheit die Rotation des Rotors (28) des Werkzeughalters und die Rotation des Spindelrotors der Motorspindel (52) regelt und steuert.

15. Verwendung eines Werkzeughalters nach einem der vorhergehenden Ansprüche 1 bis 11 in einer Motorspindel (52), wobei der Werkzeughalter (10) mit der Gehäuseeinheit (12) in das Spannelement der Motorspindel (52) eingesetzt wird und mittels des Spannelements an der Motorspindel (52) gespannt wird oder in einem Werkzeugrevolver einer Drehmaschine, wobei der Werkzeughalter (10) mit der Gehäuseeinheit (12) in das Spannelement des Werkzeugrevolvers eingesetzt wird und mittels des Spannelements an dem Werkzeugrevolver gespannt wird, **dadurch gekennzeichnet, dass** das Wellenelement (18) mittels des elektrischen Antriebs des Antriebselements (16) rotiert wird.

## Claims

1. Tool holder as a spindle insert for insertion into a clamping element of a motor spindle (52) or as an insertion element into the tool turret of a lathe, wherein the tool holder (10) comprises:
▪ a housing unit (12),
▪ a spindle unit (14) - arranged in the housing unit (12) - which comprises a drive element (16) and a rotatably mounted shaft element (18) coupled in motion to the drive element (16) and having a holding element (20) for holding a tool,
and
▪ an energy storage unit (22) arranged on or in the housing unit (12) for supplying power to the drive element (16)
▪ wherein the drive element (16) features an electric drive with a stator (26) connected to the housing unit (12) and a rotor (28) coupled in motion to the shaft element (18),
**characterized in**
▪ that the tool holder (10) further comprises a control unit (24) arranged on or in the housing unit (12) for controlling the drive element (16), and
▪ that the tool holder (10) features a bidirectional communication interface (54) for transmitting and receiving an energy capacity signal and/or a power signal to an external processor unit.

2. Tool holder according to claim 1, **characterized in that** a maximum rotational speed of the shaft element (18) coupled in motion to the rotor (28) is greater than 10,000 rpm.

3. Tool holder according to claim 1 or 2, **characterized in that** the control unit (24) features at least one switching element (34) for receiving at least one control signal, wherein the switching element (34) is switchable by means of the at least one control signal between a rotor-rotating position and a rotor-stopped position, wherein the switching element (34) electrically connects the drive element (16) to the energy storage unit (22) in the rotor-rotating position and electrically disconnects the drive element (16) from the energy storage unit (22) in the rotor-stopped position.

4. Tool holder according to claim 3, **characterized in that** the switching element (34) features a fluid-actuated pressure switch, a mechanical or inductive switch, an optical signal receiving element, a rotation sensor, and/or a wireless non-optical signal receiving element.

5. Tool holder according to claim 4, **characterized in that** the switching element (34) is the fluid-actuated pressure switch, wherein the housing unit (12) features a fluid-filled fluid line (38), which connects the pressure switch to an outlet opening (48) arranged on the holding element (20) for wetting a tool with the fluid.

6. Tool holder according to one of the preceding claims, **characterized in that** the housing unit (12) features a surface element (42) for abutment against the motor spindle (52), wherein on the surface element (42), a position switch (32) is arranged, which - in an external position, in which the tool holder (10) is not inserted into the motor spindle (52) - protrudes from the surface element (42), and the position switch (32) moves to a ready-for-operation position when the tool holder (10) is inserted into the motor spindle (52), and the position switch (32) automatically moves from the ready-for-operation to the external position when the tool holder (10) is removed from the motor spindle (52).

7. Tool holder according to one of the preceding claims, **characterized in that** the tool holder (10) further features a sealing element (44) for sealing the housing unit (12) and/or the control unit (24) features an actuating element (36) arranged on the outside of the housing unit (12) for manually adjusting the rotational speed of the rotor (28), and/or the tool holder (10) features the bidirectional communication interface (54) for transmitting and receiving a rotational speed signal and/or other process parameters to an external processor unit.

8. Tool holder according to one of the preceding claims, **characterized in that** the control unit (24) features a speed controller (37) arranged in a fluid line connection (35), wherein the speed controller (37) is designed to convert a fluid pressure transmitted by means of the fluid line connection (35) into a rotational speed.

9. Tool holder according to one of the preceding claims, **characterized in that** the tool holder features a speed sensor or is operatively connected to a speed sensor, and the control unit (24) features a speed controller (37), wherein the speed controller (37) is designed to convert a rotational speed transmitted by the speed sensor into a number of revolutions.

10. Tool holder according to one of the preceding claims, **characterized in that** the tool holder (10) further features a measuring unit for measuring a power measurement value of the drive element (16) and an evaluation unit for evaluating the power measurement value, wherein the evaluation unit outputs a damage signal when the power measurement value falls below a predefined threshold value.

11. Tool holder according to one of the preceding claims, **characterized in that** an optical and/or acoustic indicating unit for the state of charge of the energy storage unit (22) is intended.

12. Method for operating a tool holder (10) according to one of claims 3 to 11 in a motor spindle (52), wherein the electric drive is provided with electrical energy only when the control unit (24) receives a ready-for-operation position signal from the position switch and the rotor-rotating position signal from the at least one switching element.

13. System comprising a motor spindle (52) with a clamping element and a tool holder (10) according to one of the preceding claims 1 to 11, wherein the housing unit (12) of the tool holder (10) is connected to the clamping element of the motor spindle (52).

14. System according to claim 13, **characterized in that** the system (50) comprises a tool magazine with a receiving position for the tool holder (10), wherein the receiving position is equipped with a charging unit in order to charge the energy storage unit (22) of a tool holder (10) resting on the charging position with electrical energy and/or the system (50) features a processor unit that exchanges signals with the control unit (24) of the tool holder (10) via the bidirectional communication interface (54), and the processor unit in particular acts upon the control unit (24) of the tool holder (10) and/or, during the rotation of the rotor (28) of the tool holder (10), the spindle rotor of the motor spindle (52) is stationary or rotating, and/or the processor unit regulates and controls the rotation of the rotor (28) of the tool holder and the rotation of the spindle rotor of the motor spindle (52).

15. Use of a tool holder according to one of the preceding claims 1 to 11 in a motor spindle (52), wherein the tool holder (10) is inserted with the housing unit (12) into the clamping element of the motor spindle (52) and is clamped at the motor spindle (52) by means of the clamping element, or in a tool turret of a lathe, wherein the tool holder (10) is inserted with the housing unit (12) into the clamping element of the tool turret and is clamped at the tool turret by means of the clamping element, **characterized in that** the shaft element (18) is rotated by means of the electric drive of the drive element (16).

## Revendications

1. Porte-outil servant d'insert de broche destiné à être inséré dans un élément de serrage d'une broche motorisée (52) ou servant d'élément d'insertion dans la tourelle porte-outils d'un tour, le porte-outil (10) comprenant :
▪ une unité de logement (12),
▪ une unité de broche (14) - arrangée dans l'unité de logement (12) - qui comprend un élément d'entraînement (16) et un élément d'arbre (18) monté de manière rotative et couplé en mouvement à l'élément d'entraînement (16), avec un élément de retenue (20) destiné à retenir un outil,
et
▪ une unité de stockage d'énergie (22) arrangée sur ou dans l'unité de logement (12) pour l'alimentation en énergie de l'élément d'entraînement (16)
▪ l'élément d'entraînement (16) comportant un entraînement électrique avec un stator (26) relié à l'unité de logement (12) et un rotor (28) couplé en mouvement à l'élément d'arbre (18),
**caractérisé en ce**
▪ que le porte-outil (10) comprend en outre une unité de contrôle (24) arrangée sur ou dans l'unité de logement (12) pour commander l'élément d'entraînement (16), et
▪ que le porte-outil (10) comporte une interface de communication bidirectionnelle (54) destinée à transmettre et à recevoir un signal de capacité énergétique et/ou un signal de puissance vers une unité de traitement externe.

2. Porte-outil selon la revendication 1, **caractérisé en ce qu'**une vitesse de rotation maximale de l'élément d'arbre (18) couplé en mouvement au rotor (28) est supérieure à 10 000 tours/min.

3. Porte-outil selon la revendication 1 ou 2, **caractérisé en ce que** l'unité de contrôle (24) comporte au moins un élément de commutation (34) destiné à recevoir au moins un signal de commande, l'élément de commutation (34) pouvant être commuté, au moyen dudit au moins un signal de commande, entre une position « rotor en rotation » et une position « rotor à l'arrêt », l'élément de commutation (34) reliant électriquement l'élément d'entraînement (16) à l'unité de stockage d'énergie (22) dans la position « rotor en rotation » et déconnectant électriquement l'élément d'entraînement (16) de l'unité de stockage d'énergie (22) dans la position « rotor à l'arrêt ».

4. Porte-outil selon la revendication 3, **caractérisé en ce que** l'élément de commutation (34) comprend un pressostat alimenté en fluide, un commutateur mécanique ou inductif, un élément de réception de signal optique, un capteur de rotation et/ou un élément de réception de signal sans fil non optique.

5. Porte-outil selon la revendication 4, **caractérisé en ce que** l'élément de commutation (34) est le pressostat alimenté en fluide, l'unité de logement (12) comportant une conduite de fluide (38) remplie dudit fluide, qui relie le pressostat à une ouverture de sortie (48) arrangée sur l'élément de retenue (20) pour mouiller un outil avec le fluide.

6. Porte-outil selon l'une des revendications précédentes, **caractérisé en ce que** l'unité de logement (12) comporte un élément de surface (42) destiné à venir en appui contre la broche motorisée (52), un commutateur de position (32) - étant arrangé sur l'élément de surface (42) - qui, dans une position externe dans laquelle le porte-outil (10) n'est pas inséré dans la broche motorisée (52), fait saillie hors de l'élément de surface (42) et le commutateur de position (32) passe en position « prêt à fonctionner » lorsque le porte-outil (10) est inséré dans la broche motorisée (52) et le commutateur de position (32) passe automatiquement de la position « prêt à fonctionner » à la position externe lorsque le porte-outil (10) est démonté de la broche motorisée (52).

7. Porte-outil selon l'une des revendications précédentes, **caractérisé en ce que** le porte-outil (10) comporte en outre un élément d'étanchéité (44) destiné à assurer l'étanchéité de l'unité de logement (12) et/ou l'unité de contrôle (24) comporte un élément d'actionnement (36) arrangé à l'extérieur de l'unité de logement (12) pour le réglage manuel d'une vitesse de rotation du rotor (28) et/ou le porte-outil (10) comporte l'interface de communication bidirectionnelle (54) pour transmettre et recevoir un signal de vitesse de rotation et/ou d'autres paramètres de processus à une unité de traitement externe.

8. Porte-outil selon l'une des revendications précédentes, **caractérisé en ce que** l'unité de contrôle (24) comporte un régulateur de vitesse (37) arrangé dans un raccord pour conduites de fluide (35), le régulateur de vitesse (37) étant conçu pour convertir une pression de fluide transmise au moyen du raccord pour conduites de fluide (35) en une vitesse de rotation.

9. Porte-outil selon l'une des revendications précédentes, **caractérisé en ce que** le porte-outil comporte un capteur de vitesse de rotation ou est en liaison active avec un capteur de vitesse de rotation, et l'unité de contrôle (24) comporte un régulateur de vitesse (37), le régulateur de vitesse (37) étant conçu pour convertir une vitesse de rotation transmise par le capteur de vitesse de rotation en un nombre de tours.

10. Porte-outil selon l'une des revendications précédentes, **caractérisé en ce que** le porte-outil (10) comprend en outre une unité de mesure destinée à mesurer une valeur de mesure de puissance de l'élément d'entraînement (16) et une unité d'évaluation destinée à évaluer la valeur de mesure de puissance, l'unité d'évaluation émettant un signal de défaut lorsque la valeur de mesure de puissance passe en dessous d'une valeur seuil prédéfinie.

11. Porte-outil selon l'une des revendications précédentes, **caractérisé en ce qu'**une unité d'affichage optique et/ou acoustique est prévue pour indiquer l'état de charge de l'unité de stockage d'énergie (22).

12. Procédé pour faire fonctionner un porte-outil (10) selon l'une des revendications 3 à 11 dans une broche motorisée (52), l'entraînement électrique n'étant alimenté en énergie électrique que lorsque l'unité de contrôle (24) reçoit un signal de position « prêt à fonctionner » de la part du commutateur de position et le signal de position « rotor en rotation » de la part d'au moins un élément de commutation.

13. Système composé d'une broche motorisée (52) avec un élément de serrage et d'un porte-outil (10) selon l'une des revendications 1 à 11 précédentes, l'unité de logement (12) du porte-outil (10) étant reliée à l'élément de serrage de la broche motorisée (52).

14. Système selon la revendication 13, **caractérisé en ce que** le système (50) comprend un magasin d'outils comportant une position de réception pour le porte-outil (10), la position de réception étant équipée d'une unité de chargement pour charger en énergie électrique l'unité de stockage d'énergie (22) d'un porte-outil (10) reposant sur la position de chargement et/ou le système (50) comporte une unité de traitement qui échange des signaux avec l'unité de contrôle (24) du porte-outil (10) via l'interface de communication bidirectionnelle (54) et l'unité de traitement agit notamment sur l'unité de contrôle (24) du porte-outil (10) et/ou, pendant la rotation du rotor (28) du porte-outil (10), le rotor de broche de la broche motorisée (52) est à l'arrêt ou en rotation et/ou l'unité de traitement régule et commande la rotation du rotor (28) du porte-outil et la rotation du rotor de broche de la broche motorisée (52).

15. Utilisation d'un porte-outil selon l'une des revendications 1 à 11 précédentes dans une broche motorisée (52), le porte-outil (10) étant inséré avec l'unité de logement (12) dans l'élément de serrage de la broche motorisée (52) et étant serré sur la broche motorisée (52) au moyen de l'élément de serrage, ou dans une tourelle porte-outils d'un tour, le porte-outil (10) étant inséré avec l'unité de logement (12) dans l'élément de serrage de la tourelle porte-outils et étant serré sur la tourelle porte-outils au moyen de l'élément de serrage, **caractérisé en ce que** l'élément d'arbre (18) est entraîné en rotation au moyen de l'entraînement électrique de l'élément d'entraînement (16).
